**Europäisches Patentamt**

**European Patent Office**

**Office européen des brevets**

(19)

(11) Veröffentlichungsnummer: **0 097 266**

**A1**

(12) # EUROPÄISCHE PATENTANMELDUNG

(21) Anmeldenummer: **83105354.1**

(22) Anmeldetag: **31.05.83**

(51) Int. Cl.³: **A 61 C 5/04**
**A 61 C 5/12**

(30) Priorität: **01.06.82 DE 3220621**

(43) Veröffentlichungstag der Anmeldung:
**04.01.84 Patentblatt 84/1**

(84) Benannte Vertragsstaaten:
**AT CH FR GB IT LI SE**

(71) Anmelder: **Fried. Krupp Gesellschaft mit beschränkter Haftung**
**Altendorfer Strasse 103**
**D-4300 Essen 1(DE)**

(72) Erfinder: **Eenboom, Algund, Dr. Med. Dent.**
**Kleenfahntjerweg 34**
**D-2953 Rhauderfehn/Ostfriesland(DE)**

(54) **Matrize für die Zahnheilkunde.**

(57) Die Erfindung betrifft eine Matrize für die Zahnheilkunde mit einem Matrizenband (2), das um den zu füllenden Zahn (6) gelegt und in den gespannten Zustand gebracht werden kann. Für den Spannvorgang wird die Verformung eines Teils (7) aus Bimetall oder Memory-Metall durch Wärmeeinwirkung ausgenutzt.

Fig.1

EP 0 097 266 A1

FRIED. KRUPP GESELLSCHAFT MIT BESCHRÄNKTER HAFTUNG
in Essen

Matrize für die Zahnheilkunde

Die Erfindung betrifft eine Matrize für die Zahnheilkunde mit einem Matrizenband, das in einem ungespannten Zustand um den zu füllenden Zahn gelegt und zur exakten Anlage und Fixierung in einen gespannten Zustand bringbar ist.

Zur Füllung großer Kavitäten, die sich in den Seitenbereich der Zähne erstrecken, werden den Zahn in der Form einer Schalung umschließende Matrizen verwendet, um den für die Kondensation des Amalgams erforderlichen Seitenhalt zu gewährleisten. Solche Matrizen sollen die Zahnkrone anatomisch richtig wiedergeben und die Herstellung des Kontaktes ermöglichen, zervikal exakt anliegen, die nötige Konturierung gewährleisten und beim Stopfprozeß form- und lagebeständig bleiben. Die Matrizenbänder werden mit Hilfe von Matrizenhaltern verschiedener Art gespannt und in Position gehalten, die wegen der notwendigen Spannvorrichtungen verhältnismäßig kompliziert und schwer ausgebildet sind und nach dem Anlegen der Matrize durch Betätigen von Spannschrauben befestigt werden und auch während des Füll- und Stopfvorganges im Mund des Patienten verbleiben müssen.

Der Erfindung liegt die Aufgabe zugrunde, eine Matrize für die Zahnheilkunde zu schaffen, die wesentlich einfacher und leichter aufgebaut ist, einfacher anzulegen ist und den Patienten weniger stört.

Die Erfindung geht also aus von einer Matrize mit einem Matrizenband, das in einem ungespannten Zustand um den zu füllenden Zahn gelegt und zur exakten Anlage und Fixierung in einen gespannten Zustand bringbar ist, und ist erfindungsgemäß dadurch gekennzeichnet, daß sie derart ausgebildet ist, daß das Matrizenband durch Wärmeeinwirkung aus der ungespannten in die gespannte Lage bringbar ist.

Eine erste Ausführungsform mit einem um den zu füllenden Zahn gelegten Matrizenband, das über ein an beide Enden angreifendes Spannglied gespannt werden kann, ist dadurch gekennzeichnet, daß zwischen den beiden Enden des Matrizenbandes ein durch Wärmeeinwirkung seine Form und damit den Abstand zwischen den beiden Enden änderndes Spannglied angeordnet ist.

Das Spannglied kann aus Bimetall oder aus Memory-Metall bestehen, durch entsprechende Wärmeanwendung aus einer ersten in eine zweite definierte Form gebracht werden und durch Einwirkung auf die Enden des Matrizenbandes dieses um den zu füllenden Zahn spannen.

Eine zweite Ausführungsform ist dadurch gekennzeichnet, daß das Matrizenband als geschlossener Ring ausgebildet ist und aus Memory-Metall besteht, und daß der Ring vor dem Anlegen um den Zahn bei einer Temperatur unterhalb der Sprungtemperatur durch mechanische Krafteinwirkung aufgeweitet und nach dem Anlegen durch Erwärmung über die Sprungtemperatur in die gespannte
Lage gebracht wird.

Weitere vorteilhafte Ausgestaltungen der Erfindung
sind den Unteransprüchen zu entnehmen.

Die Erfindung wird nachfolgend anhand von Ausführungsbeispielen näher erläutert.

Es zeigt:

Fig. 1          schematisch einen zu füllenden Zahn
                mit einer erfindungsgemäßen Matrize
                im gespannten Zustand in Draufsicht;

Fig. 2          die Matrize nach Figur 1 in der Ansicht von vorn;

Fig. 3          das Spannglied einer Matrize nach

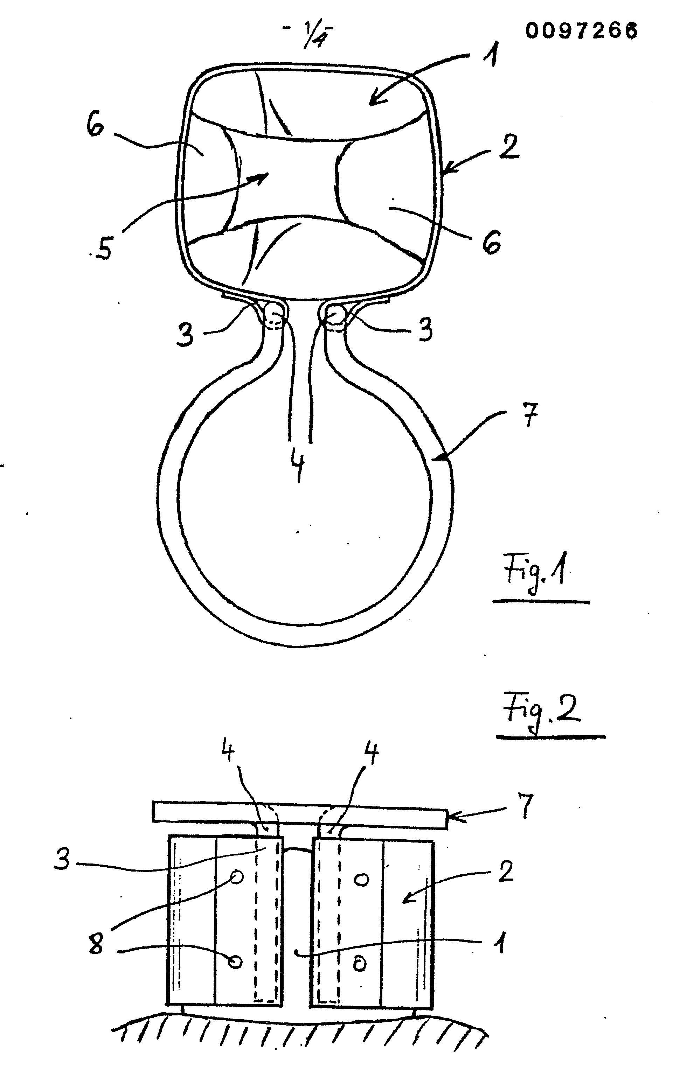

                Figur 1 im nicht gespannten Zustand in Draufsicht;

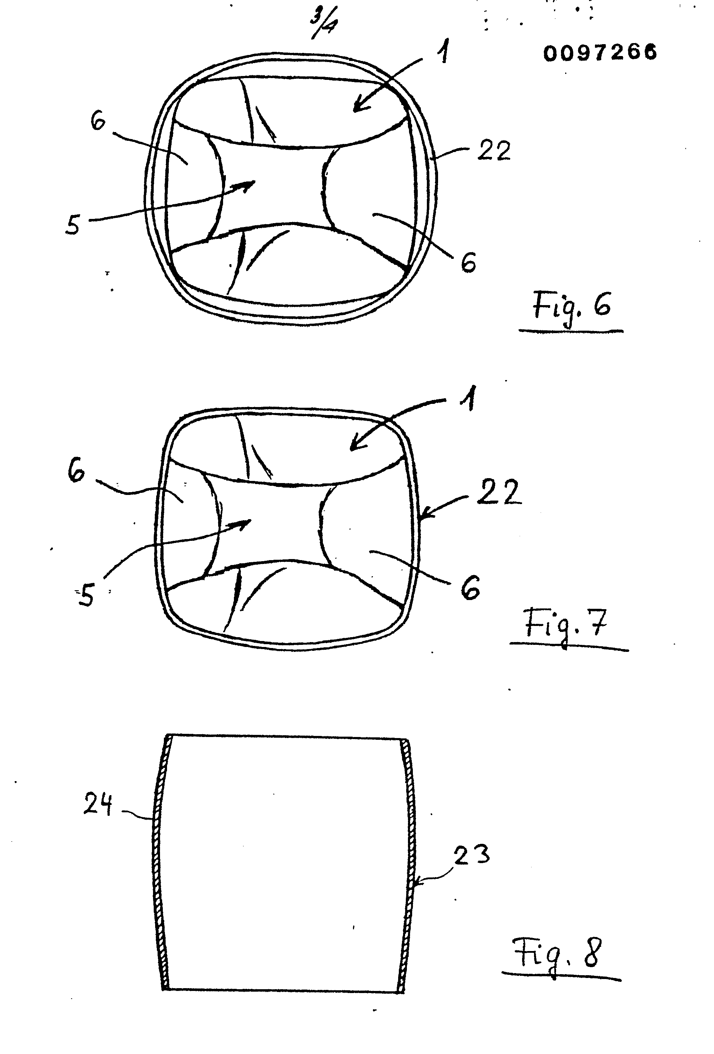

Fig. 4          ein Detail einer anderen Ausführungsform der Matrize im Schnitt;

Fig. 5          eine Vorderansicht des Details nach
                Figur 4;

Fig. 6          eine Draufsicht auf eine weitere
                Ausführungsform im ungespannten
                Zustand;

- 4 -

| Fig. 7 | eine Draufsicht auf die Ausführungsform nach Figur 6, jedoch im gespannten Zustand; |

Fig. 8   · einen Axialschnitt durch eine weitere Ausführungsform, und

Fig. 9   eine schematische Darstellung eines Warmluftgebläses zur Erwärmung des wärmeempfindlichen Matrizenteils.

In den Figuren 1 und 2 ist eine Matrize mit einem um den Zahn 1 gespannten Matrizenband 2 gezeigt. Der Zahn 1 ist bereits mit einer Kavität 5 versehen, deren offene Seitenbereiche 6 durch das angelegte Matrizenband verschlossen sind, so daß die Kondensation des eingefüllten Amalgams ähnlich wie bei einer geschlossenen Kavität erfolgen kann.

Als Matrizenband 2 werden im vorliegenden Beispiel vorgefertigte Stücke aus Bandmaterial verwendet, die an ihren Enden zu Ösen 3 umgebogen und durch Punktschweißstellen 8 in dieser Lage fixiert sind. In diese Ösen 3 werden die stiftförmigen Enden 4 eines C-förmigen Spanngliedes 7 eingehängt und drücken die beiden Enden (Ösen 3) des Matrizenbandes 2 zusammen, so daß das Matrizenband 2 fest um den Zahn 1 gespannt und fixiert wird.

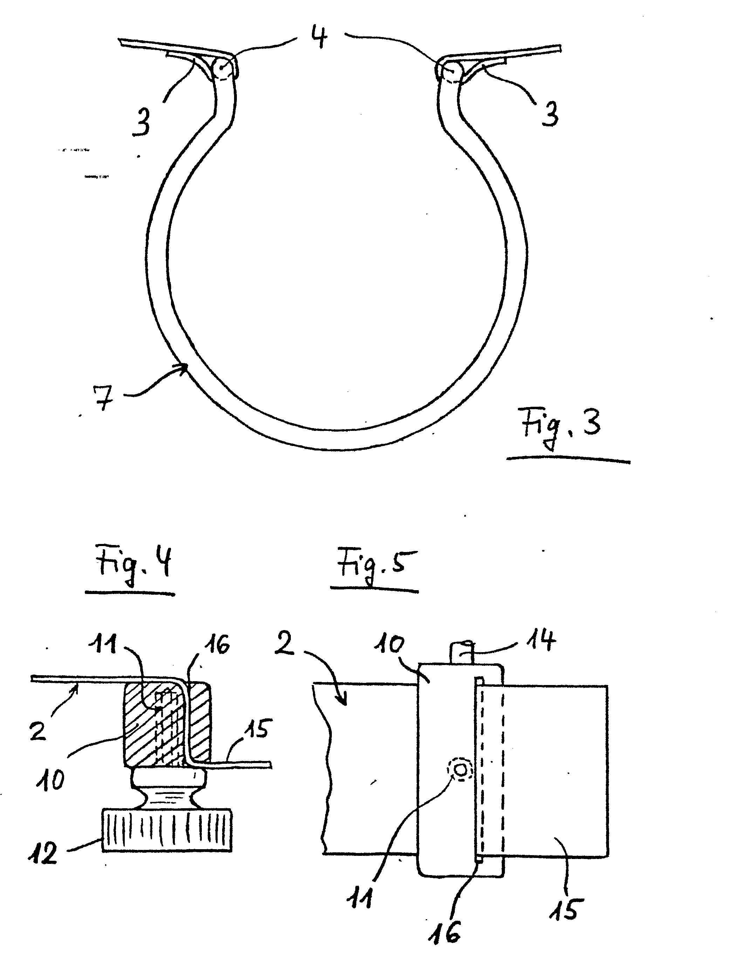

Während die Figuren 1 und 2 das Matrizenband 2 im gespannten Zustand zeigen, in dem die Enden 4 des Spanngliedes 7 aufeinander zu gezogen sind, zeigt Figur 3 das Spannglied 7 im offenen Zustand, in dem die auf die Enden 4 des Spanngliedes aufgesteckten Ösen 3 des Matrizenbandes auseinandergehalten werden. Das Anlegen eines Matrizenbandes geschieht folgendermaßen: Zunächst wird im offenen Zustand des Spanngliedes 7 (Fig. 3) ein Matrizenband entsprechender Länge mit seinen Ösen 3 auf die Stifte 4 des Spanngliedes 7 aufgesteckt. Nach Anlegen des Matrizenbandes 2 um den zu füllenden Zahn 1 wird auf den C-förmigen Teil des Spanngliedes 7 Wärme in der Weise appliziert, daß sich das C-förmige Spannglied 7 an seinen Enden zusammenbiegt und das um den Zahn 1 gelegte Matrizenband 2 strammzieht.

Die Wärmeeinwirkung auf das Spannglied 7 ist bei einer ersten Ausführungsform mit einem Spannglied 7 aus Bimetall folgendermaßen: Das Spannglied 7 ist so geformt, daß seine beiden Enden 4 bei Raumtemperatur nahe beieinander liegen, und zwar noch näher als in der in Figur 1 gezeigten Stellung. Zum Anlegen des Matrizenbandes 2 wird der C-förmige Teil des Spanngliedes 7 auf geeignete Weise erwärmt, so daß es sich in die in Figur 3 gezeigte Stellung auseinanderbiegt. In dieser Stellung kann das auf die Enden 4 aufgesteckte Matrizenband 2 um den Zahn 1 gelegt werden. Kühlt sich nun das Spanngleid 7 ab, so biegt es sich in die ursprüngliche Stellung zurück und zieht das Matrizenband 2 um den Zahn 1 fest (Figur 1).

Bei einer anderen Ausführungsform, bei der das Spannglied 7 aus Memory-Metall besteht, arbeitet die Matrize folgendermaßen: Das C-förmige Spannglied 7 wird durch Warmverformung bei einer Temperatur oberhalb der Sprungtemperatur des Memory-Metalls in eine zusammengebogene Form gebracht. In dieser Stellung sind die Enden 4 noch näher beieinander als in Figur 1 gezeigt. Vor dem Aufsetzen des Matrizenbandes 2 auf den Zahn 1 wird das C-förmige Spannglied 7 durch mechanische Krafteinwirkung bei einer Temperatur (Raumtemperatur), die unterhalb der Sprungtemperatur des Memory-Metalls liegt, aufgebogen in die in Figur 3 gezeigte Form. Nach Umlegen des Matrizenbandes 2 um den zu füllenden Zahn 1 wird das Spannglied 7 auf geeignete Weise auf eine Temperatur oberhalb der Sprungtemperatur des Memory-Metalls erwärmt, wodurch das Spannglied sich in die ursprüngliche Form zurückbiegt und über die Ösen 3 das Matrizenband 2 in die in Figur 1 gezeigte Stellung zusammenzieht.

Beide besprochenen Ausführungsformen zeigen, daß das Anlegen und Spannen des Matrizenbandes 2 auf sehr einfache Weise geschehen kann und daß im Munde des Patienten nur das verhältnismäßig zierlich geformte und leichte Spannglied 7 verbleibt. Da die Zähne 1 von verschiedener Größe sein können, ist es bei den nach den Figuren 1, 2 und 3 beschriebenen Ausführungsbeispielen erforderlich, Matrizenbänder 2 mit verschiedener Länge auf Vorrat zu halten.

Bei einer weiteren Ausführungsform der Erfindung ist es jedoch auch möglich, als Matrizenband 2 Bandmaterial zu verwenden, das grob auf Länge vorgeschnitten wird und danach in einer besonderen Vorrichtung zum Festklemmen an den Enden des Spanngliedes befestigt wird, siehe hierzu die Figuren 4 und 5. Bei dieser Ausführungsform ist ein ähnliches Spannglied (wie in den Figuren 1 bis 3) vorgesehen, an deren beiden Enden 14 (Figur 5) jedoch je eine Vorrichtung zum Festklemmen des Matrizenbandes abgeordnet ist. Diese Vorrichtung besteht aus einem Klemmblock 10 mit einem Schlitz 16, durch den das Matrizenband durchgesteckt und nach Umbiegen mittels einer Klemmschraube 12 festgeklemmt werden kann. Diese Klemmschraube ist in ein Gewinde 11 einschraubbar. Beim Anlegen des Matrizenbandes um den Zahn 1 werden die freien Enden 15 des Matrizenbandes durch die beiden Schlitze 16 der Klemmvorrichtungen gesteckt und soweit herausgezogen, daß das Matrizenband 2 zur vorläufigen Fixierung um den Zahn 1 festgezogen ist. Das freie Ende 15 des Matrizenbandes wird rechtwinklig umgebogen und durch Anziehen der Klemmschraube 12 festgeklemmt. Danach erfolgt das eigentliche Festspannen des Matrizenbandes 2 auf gleiche Weise wie bei der Ausführungsform nach den Figuren 1 bis 3. Auch bei dieser Ausführungsform ist sowohl ein Spannglied aus Bimetall als auch aus Memory-Metall verwendbar.

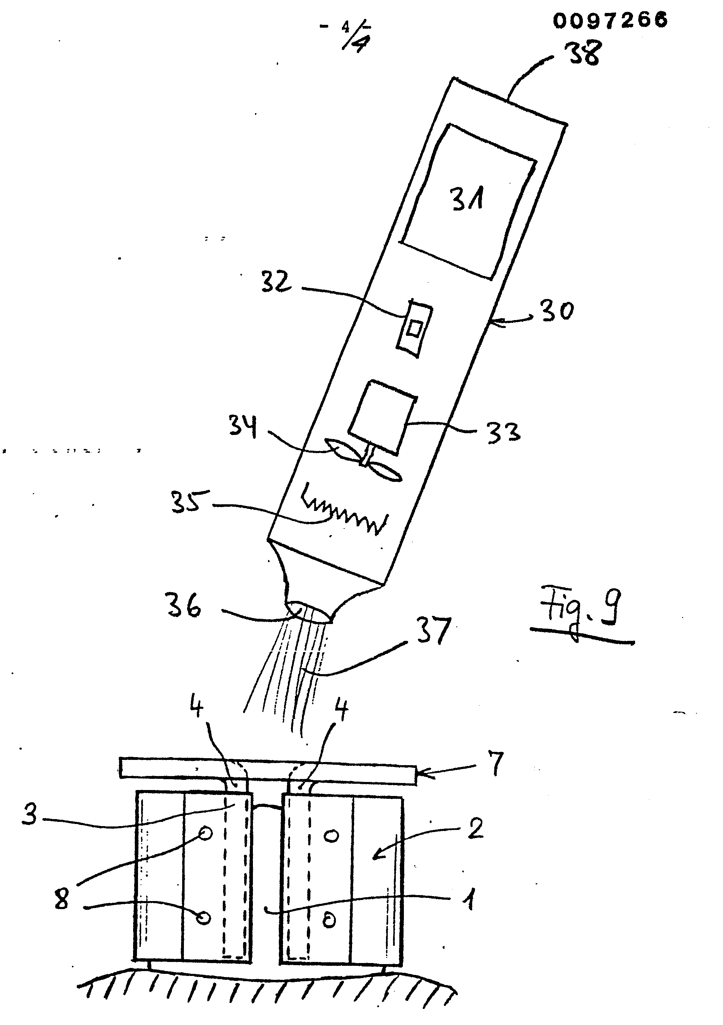

Die Figuren 6 und 7 zeigen nun eine noch einfachere Matrize, die nur noch aus einem geschlossenen Matrizenband 22 in Ringform besteht, das aus Memory-Metall hergestellt ist. Bei dieser Ausführungsform wird das außerordentlich hohe Dehnungs- und Rückstellvermögen des Memory-Metalls ausgenutzt.

Das Matrizenband 22 wird vor dem Auflegen auf den Zahn 1 durch mechanische Krafteinwirkung bei einer Temperatur unterhalb der Sprungtemperatur aufgeweitet und auf den Zahn 1 aufgelegt (Figur 6). Danach wird das Matrizenband 22 auf eine Temperatur erwärmt, die über der Sprungtemperatur liegt. Hierdurch schrumpft das Band wieder auf die ursprüngliche Länge zurück und legt sich eng an die Wände des Zahnes 1 an.

Da die zu behandelnden Zähne unterschiedliche Durchmesser haben, ist es erforderlich, Matrizenbänder 22 in mehreren Größen vorrätig zu haben, obwohl wegen des großen Dehnbereiches eine grobe Staffelung ausreicht.

Zur besseren Modellierung der interdentalen Kontaktpunkte zwischen den Zähnen ist das Matrizenband 23 in Ringform nach Figur 8 vorgesehen. Dieses Matrizenband ist nicht zylindrisch, wie in den Figuren 6 und 7, sondern in Achsrichtung leicht gewölbt ausgebildet, wobei der Buckel 24 entsprechend der normalen Höhe der Kontaktpunkte etwa 1/3 von dem oberen (freien) Ende des Matrizenbandes 23 entfernt ist.

Um die Anzahl der vorrätig zu haltenden Matrizenbänder gering zu halten, ist es auch möglich, in der Praxis des Zahnarztes durch entsprechende Vorrichtungen die Matrizenbänder 22, 23 auf genaues, gewünschtes Maß zu bringen. Dies ist folgendermaßen möglich: Zunächst wird der Umfang des zu behandelnden Zahnes mit einem Ringmaß abgemessen. Danach wird eine Aufweitvorrichtung auf dieses Maß eingestellt und mit dieser das Matrizenband 22, 23 bei einer Temperatur oberhalb der Sprungtemperatur des Memory-Metalls auf dieses Maß aufgeweitet. Anschließend wird das Matrizenband auf eine Temperatur unterhalb der Sprungtemperatur abgeschreckt. Das so vorbehandelte Matrizenband 22, 23 hat nun das gewünschte Endmaß, das sich bei Erwärmen über die Sprungtemperatur hinaus einstellen würde. Dieses Maß muß jedoch etwas kleiner bemessen werden als der Umfang des Zahnes, damit das Matrizenband unter Spannung auf dem Zahn 1 aufsitzt.

Das Erwärmen des Spanngliedes 7 bzw. des Matrizenbandes 22 kann entweder durch Anwendung einer entsprechend heißen Flüssigkeit (z.B. Wasser), durch Anlegen einer elektrischen Stromquelle mit niedriger Spannung oder durch Einwirken eines Hochfrequenzfeldes erfolgen.

Über Memory-Metalle wird z. B. in dem Aufsatz "Some Application of Shape-Memory Alloys" von C.M. Wayman berichtet, veröffentlicht in "Journal of Metals", Juni 1980, Seiten 129 - 137. In diesem Aufsatz werden die Zusammensetzung solcher Memory-Metalle, ihre Eigenschaften und ihr Verhalten beschrieben. Es wird angegeben, daß sich die Sprungtemperatur, d. h. die Temperatur, bei der das Material aus der martensitischen Phase (martensitic phase) in die Ursprungphase (parent phase) übergeht, in weiten Bereichen vorher festlegen läßt, so daß bei einer Sprungtemperatur von z. B. $30^{o}$ die im Mund herrschende Körpertemperatur des Patienten zur Auslösung des Memory-Sprunges ausgenutzt werden kann. Es muß nur sichergestellt werden, daß die Sprungtemperatur nicht zu nahe an die im Behandlungsraum herrschende Raumtemperatur herankommt. Unterstützt werden kann die Wärmeeinwirkung dadurch, daß der Patient einen Schluck heißes Wasser oder dergleichen in den Mund nimmt und auf das Memory-Metall einwirken läßt.

Bei Spanngliedern 7 aus Bimetall ist die Wärmeeinwirkung ebenfalls unproblematisch, weil diese vor dem Aufsetzen des Matrizenbandes 2 auf den Zahn außerhalb des Mundes des Patienten erfolgt. Die angewandte Temperatur muß jedoch so niedrig sein, daß sich diese bei der teilweisen Übertragung auf das Matrizenband 2 nicht unangenehm auf den Patienten auswirkt.

Zum Erwärmen des wärmeempfindlichen Teils der Matrize
ist es auch denkbar, ein Warmluftgebläse in kleinster,
stabförmiger Bauart zu verwenden, wie in Figur 9 gezeigt. Das Warmluftgebläse 30 enthält in seinem Innern
(in der Zeichnung nur schematisch angedeutet) einen
aufladbaren Akkumulator 31 zur Energieversorgung,
einen Schalter 32, einen Elektromotor 33 mit einem
Lüfterrad 34 und eine Heizung 35. Die Kaltluft wird
über die Einsaugöffnung 38 angesaugt, durch die Heizung 35 erwärmt und über die Blasöffnung 36 ausgeblasen.

Der Warmluftstrom 37 wird auf den wärmeempfindlichen
Teil 7 der Matrize gerichtet und erwärmt diese. Dabei
ist es gleichzeitig möglich, eine in die Kavität schon
eingebrachte Unterfüllung durch die Warmluft schneller
und besser zum Erhärten zu bringen, so daß die Wartezeit reduziert wird.

A n s p r ü c h e :

1. Matrize für die Zahnheilkunde mit einem Matrizenband, das in ungespanntem Zustand um den zu füllenden Zahn gelegt und zur exakten Anlage und Fixierung in einen gespannten Zustand bringbar ist, d a d u r c h   g e k e n n z e i c h n e t, daß die Matrize derart ausgebildet ist, daß durch (indirekte oder direkte) Wärmeeinwirkung das Matrizenband (2 indirekt; 22 oder 23 direkt) aus dem ungespannten in den gespannten Zustand bringbar ist.

2. Matrize nach Anspruch 1 mit einem um den zu füllenden Zahn gelegten Matrizenband, das über ein an beide Enden angreifendes Spannglied gespannt werden kann, d a d u r c h   g e k e n n z e i c h n e t, daß zwischen den beiden Enden (3, 13) des Matrizenbandes (2) ein durch Wärmeeinwirkung seine Form und damit den Abstand zwischen den beiden Enden änderndes Spannglied (7) angeordnet ist.

3. Matrize nach Anspruch 2, dadurch gekennzeichnet, daß das Spannglied (7) etwa C-förmig ausgebildet ist, an dessen beiden Schenkelenden (4, 14) die beiden Enden (3, 13) des Matrizenbandes (2) befestigbar sind.

4. Matrize nach Anspruch 2 oder 3, dadurch gekennzeichnet, daß das Spannglied (7) aus Bimetall besteht.

5. Matrize nach Anspruch 4, dadurch gekennzeichnet, daß das Spannglied (7) so ausgebildet ist, daß es im erwärmten Zustand einen größeren Abstand zwischen seinen Enden (4, 14) hat als in abgekühltem Zustand.

6. Matrize nach Anspruch 2 oder 3, dadurch gekennzeichnet, daß das Spannglied (7) aus Memory-Metall besteht.

7. Matrize nach Anspruch 6, dadurch gekennzeichnet, daß das Spannglied (7) so ausgebildet und im erwärmten Zustand so geformt worden ist, daß es einen geringeren Abstand zwischen seinen Enden (4, 14) hat, daß es vor dem Aufsetzen des Matrizenbandes (2) auf den Zahn (1) durch Krafteinwirkung in eine Form mit einem größeren Abstand zwischen seinen Enden (4, 14) aufbiegbar und nach dem Aufsetzen einer Erwärmung über die Sprungtemperatur des Memory-Metalls aussetzbar ist.

8. Matrize nach einem oder mehreren der Ansprüche 3 bis 7, dadurch gekennzeichnet, daß das Matrizenband (2) beidseitig mit Einhängeösen (3) versehen ist, in die entsprechend geformte Stifte (4) oder dergleichen des Spanngliedes (7) einhängbar sind.

9. Matrize nach einem oder mehreren der Ansprüche 3 bis 7, dadurch gekennzeichnet, daß das Matrizenband aus Streifenmaterial besteht und das Spannglied (7) an seinen beiden Anschlüssen mit Vorrichtungen (10, 16, 12) zum Festklemmen der beiden Enden (15) des Matrizenbandes (2) versehen ist.

10. Matrize nach Anspruch 1, dadurch gekennzeichnet, daß das Matrizenband als geschlossener Ring (22, 23) ausgebildet ist und aus Memory-Metall besteht, und daß der Ring vor dem Anlegen um den Zahn (1) bei einer Temperatur unterhalb der Sprungtemperatur durch mechanische Krafteinwirkung aufgeweitet und nach dem Anlegen durch Erwärmung über die Sprungtemperatur in die gespannte Lage gebracht wird.

11. Matrize nach Anspruch 10, dadurch gekennzeichnet, daß das Matrizenband (23), in Achsrichtung gesehen, eine von der Zylinderform abweichende konvex gewölbte Form hat.

12. Matrize nach Anspruch 10 oder 11, dadurch gekennzeichnet, daß das Matrizenband (22, 23) vor der mechanischen Aufweitung bei einer oberhalb der Sprungtemperatur liegenden Temperatur auf ein gewünschtes genaues Maß vorgeformt wird.

13. Verfahren zum Erwärmen des wärmeempfindlichen Teils der Matrize nach einem oder mehreren der Ansprüche 1 bis 12, dadurch gekennzeichnet, daß dieses einer heißen Flüssigkeit ausgesetzt wird.

14. Verfahren zum Erwärmen des wärmeempfindlichen Teils der Matrize nach einem oder mehreren der Ansprüche 1 bis 12, dadurch gekennzeichnet, daß dieses für eine bestimmte Zeit an eine elektrische Stromquelle angeschlossen wird.

15. Verfahren zum Erwärmen des wärmeempfindlichen Teils der Matrize nach einem oder mehreren der Ansprüche 1 bis 12, dadurch gekennzeichnet, daß dieses für eine bestimmte Zeit einer Hochfrequenz-Erwärmung ausgesetzt wird.

16. Verfahren nach Anspruch 13 für eine Matrize nach Anspruch 6, 7, 10, 11 oder 12, dadurch gekennzeichnet, daß die heiße Flüssigkeit, deren Temperatur über der Sprungtemperatur des Memory-Metalls liegt, vom Patienten in den Mund eingenommen wird.

17. Verfahren zum Erwärmen des wärmeempfindlichen Teils der Matrize nach einem oder mehreren der Ansprüche 1 bis 12, dadurch gekennzeichnet, daß dieses mit einem Heißluftgebläse angeblasen wird.

18. Verfahren zum Behandeln eines zu füllenden Zahnes unter Anwendung des Verfahrens nach Anspruch 17, gekennzeichnet durch folgende Verfahrensschritte:

   a) die zu füllende Kavität wird gebohrt,
   b) die Unterfüllung wird eingebracht,
   c) die Matrize nach einem oder mehreren der Ansprüche 1 bis 12 wird angelegt,
   d) es wird Heißluft appliziert, die zum einen die Unterfüllung aushärtet und zum anderen die Matrize spannt,
   e) die Deckfüllung wird angebracht.

- ¼ -

Fig.1

Fig.2

0097266

Fig. 3

Fig. 4          Fig. 5

3/4

0097266

Fig. 6

Fig. 7

Fig. 8

38

31

32

30

34

33

35

36

37

Fig. 9

4   4

7

3

2

8

1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y,A | DE-A-2 328 231 (UNIVERSITY OF IOWA) <br> * Seite 3, Zeile 16 - Seite 6, Zeile 19 * | 1,6,7, 13-17 | A 61 C 5/04 <br> A 61 C 5/12 |
| | --- | | |
| Y,A | DE-C-1 075 276 (TRANGMAR) <br> * Spalte 8, Zeilen 33-45; Figuren 1, 2 * | 1,11 | |
| | --- | | |
| Y,A | AT-B- 171 024 (WALSER) <br> * Seite 1, Zeilen 26-48; Figuren 2, 6 * | 1,8 | |
| | ----- | | |

**RECHERCHIERTE SACHGEBIETE (Int. Cl. ³)**

A 61 C 5/00
A 61 C 7/00

Der vorliegende Recherchenbericht wurde für alle Patentansprüche erstellt.

| Recherchenort | Abschlußdatum der Recherche | Prüfer |
|---|---|---|
| BERLIN | 22-08-1983 | SIMON J J P |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82